# EUROPEAN PATENT SPECIFICATION

(11) **EP 1 371 286 B1**
(45) Date of publication and mention of the grant of the patent: **09.03.2005**
(21) Application number: 03394046.1
(22) Date of filing: 29.05.2003
(51) Int. Cl.: A01K 69/06

(54) **A marine trap**
Reuse
Nasse

(30) Priority: 10.06.2002 IE 20020463; 27.06.2002 IE 20020526; 02.04.2003 IE 20030245
(43) Date of publication of application: 17.12.2003
(73) Proprietor: QUILL, Patrick John, Carrigaline, County Cork (IE)
(72) Inventor: QUILL, Patrick John, Carrigaline, County Cork (IE)
(74) Representative: Jones, Graham H.

(56) References cited:
- GB-A- 824 757
- US-A- 4 429 659

## Description

### INTRODUCTION

The invention relates to fish cages such as cages for fish farming, or marine traps for crustaceans such as lobster, crab, or prawn traps ("pots"), see e.g. the document US-A-4 429 659.

At present, conventional lobster pots comprise a steel frame and chafing rope wound around the frame members and supporting a net. However, such pots suffer from having a short useful life because of rusting of the frame and damage to the chafing rope and net. An example is the lobster pot described in GB2365306A.

Also, cages for fish farming are typically of steel frame construction in their rigid portions. An example is that disclosed in FR2818093.

The invention is therefore directed towards providing a more robust construction of fish cage.

### SUMMARY OF THE INVENTION

According to the invention, there is provided a fish cage comprising a frame and a mesh, wherein the frame comprises frame members having a metal core and a plastics coating, and joints having sockets into which the frame members are inserted.

This provides very high strength frame members, and interconnection in a simple and robust manner.

In one embodiment, the frame members comprise a metal core inserted in a plastics sleeve.

This provides a particularly good combination of strength and corrosion resistance.

In another embodiment, the metal core is of steel material.

In a further embodiment, at least some of the joints are of plastics material.

In one embodiment, at least one frame member is heat sealed at an end to a socket of a joint.

This provides both additional strength to the joints, and helps prevent water ingress to the metal cores.

In another embodiment, the heat seal extends in a ring between the socket and the tube.

In a further embodiment, the frame comprises at least one corner joint having three mutually orthogonal sockets.

In one embodiment, the frames comprises at least one T-joint having a pair of opposed in-line sockets and an orthogonal socket.

In another embodiment, the sleeves are of polyethylene material.

In a further embodiment, the mesh is of stiff plastics-coated steel material.

In one embodiment, the mesh is mounted within the frame.

In another embodiment, the mesh is secured to the frame by ties tying the mesh to frame members.

In a further embodiment, the fish cage is a marine trap comprising a bait holder and an inlet.

In one embodiment, the cage further comprises a protective web of material extending around at least one joint.

In another embodiment, at least one bar extends through the protective web.

In a another aspect, the invention provides a method of producing a fish cage comprising the steps of:
inserting metal cores into plastics sleeves to provide bars; and
interconnecting the bars by inserting the bars into sockets of joints.

In one embodiment, the joints are of plastics material.

In another embodiment, the method comprises the further steps of applying heat in a ring around a joint socket to heat fuse the socket to the bar.

In a further embodiment, the heating temperature is in a range of 120°C to 140°C.

### DETAILED DESCRIPTION OF THE INVENTION

### Brief Description of the Drawings

The invention will be more clearly understood from the following description of some embodiments thereof, given by way of example only with reference to the accompanying drawings in which:-
Fig. 1 is a perspective view from above of a lobster pot of the invention in which mesh and trap details have been largely omitted for clarity;
Fig. 2 is a perspective view showing inlets and a bait holder of the pot;
Fig. 3 is a perspective view showing a corner joint in more detail and connection of a mesh to the frame;
Fig. 4 is a perspective view showing a corner joint in more detail;
Fig. 5 is a cross-sectional view of a frame bar;
Fig. 6 is a perspective view of another joint of the frame;
Figs. 7(a) and 7(b) are perspective views showing joint protective covers; and
Fig. 8 is a perspective view of an alternative lobster pot of the invention.

### Description of the Embodiments

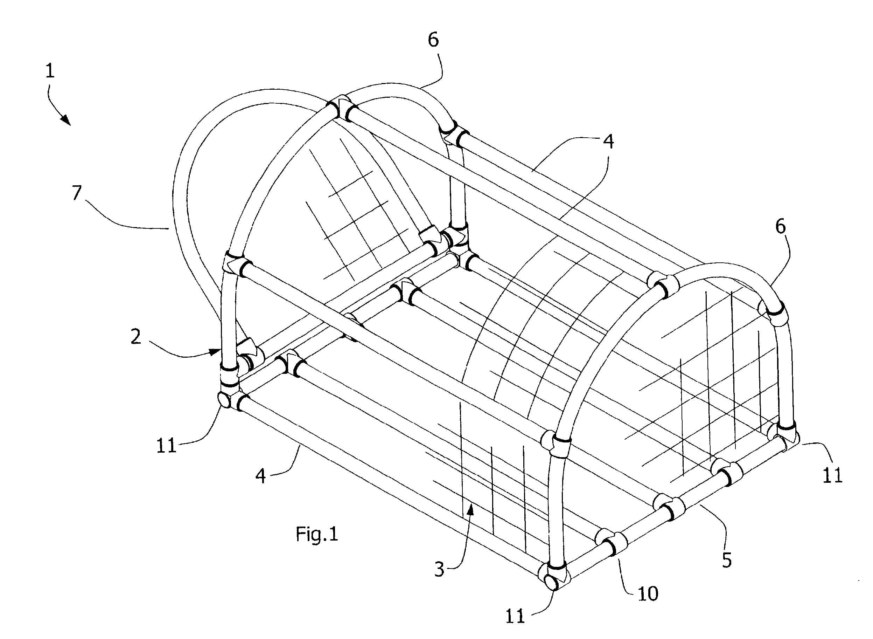

Referring to Fig. 1 a lobster pot 1 of the invention is illustrated. The pot 1 comprises a frame 2 and a stiff mesh cage 3. The frame 2 comprises a series of longitudinal bars 4 forming a planar base and an arch, a pair of transverse bars 5, a pair of arch bars 6 at "gable ends", and an end opening arched bar 7. The bars are interconnected as illustrated by T-joints 10 and corner joints 11. The mesh cage 3 is only illustrated generally in Fig. 1. In this embodiment an end opening is formed by an arched bar and mesh panel, however, another arrangement such as one having a mesh panel only may be used.

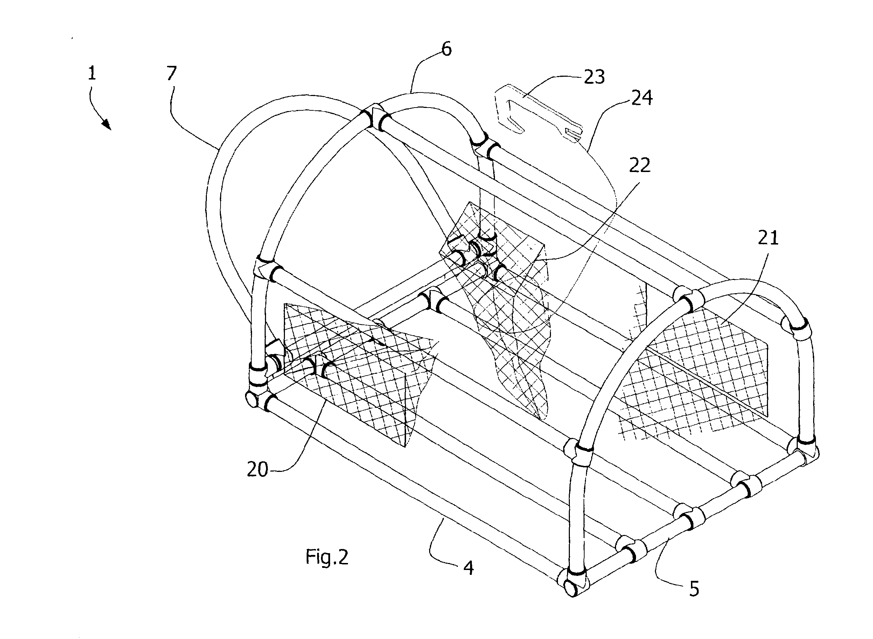

Referring to Fig. 2 the pot 1 also comprises lobster inlet 20 and 21 and a bait holder 22, all of nylon netting material. These are of conventional construction. A hook 23 is attached to the end of an elasticated rope 24 which is wrapped at its far end around the bait holder 22. The rope 24 is arranged so that when the hook 23 is pulled over to connect to mesh within the arched bar 7 to hold it closed, it tightens around the bait holder 22 to prevent access.

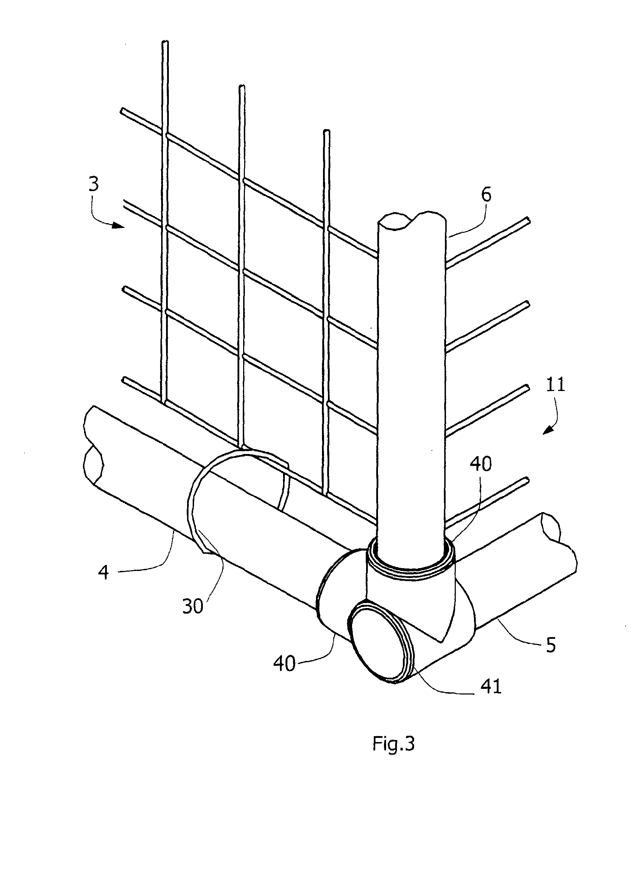

As shown in Fig. 3 the cage is of stiff plastics-coated wire mesh. It is self-supporting, having a configuration fitting within the frame 2 and merely being connected to it by deformable metal ties 30. In another embodiment these may be of the plastics single-use type referred to as "tie-wraps". However they may be of any other suitable material. Because the mesh 3 is stiff and self-supporting extensive connections to the frame 2 are not required.

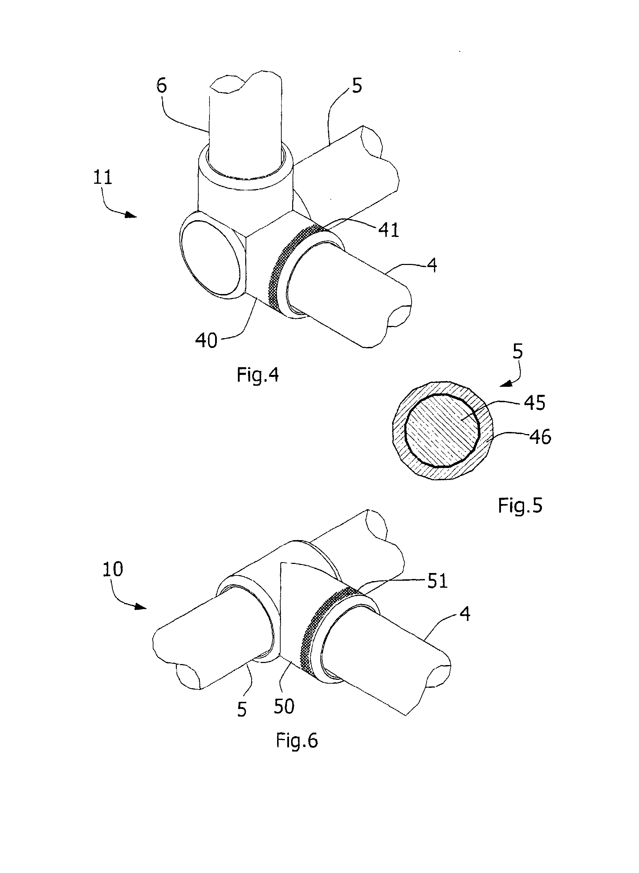

Referring also to Figs. 4 to 6, the bars are interconnected during manufacture by simply push-fitting the end of a bar into a socket 40 of the corner joint 11 or a socket 50 of the T-joint 10. This is a friction fit. The connection is completed by applying heat at 120°C to 140°C in a ring 41 or 51 around the end of the socket 40 or 50. This thermally fuses the socket to the bar, which is of polyethylene material on the outside.

As shown in Fig. 5 each bar 4, 5, 6, and 7 has a steel core 45 of 13 mm diameter fitted tightly into a polyethylene sleeve 46 having an internal diameter of 13 mm and an outside diameter of 20 mm. Thus, the bars 4, 5, 6, and 7 have a high strength provided by the steel core 45. The arched bars are produced by push-fitting steel cores 45 into sleeves 46 and then bending them. The steel core is protected from corrosion by the polyethylene sleeve 46, which also provides a degree of mechanical strength. Also, the polyethylene sleeve 46 allows the bar to be bonded to the relevant joint 10 or 11 with a high strength friction fit and heat fusion bond which prevents ingress of water and maintains structural integrity with repeated impact on the sea bed, quay, and boat.

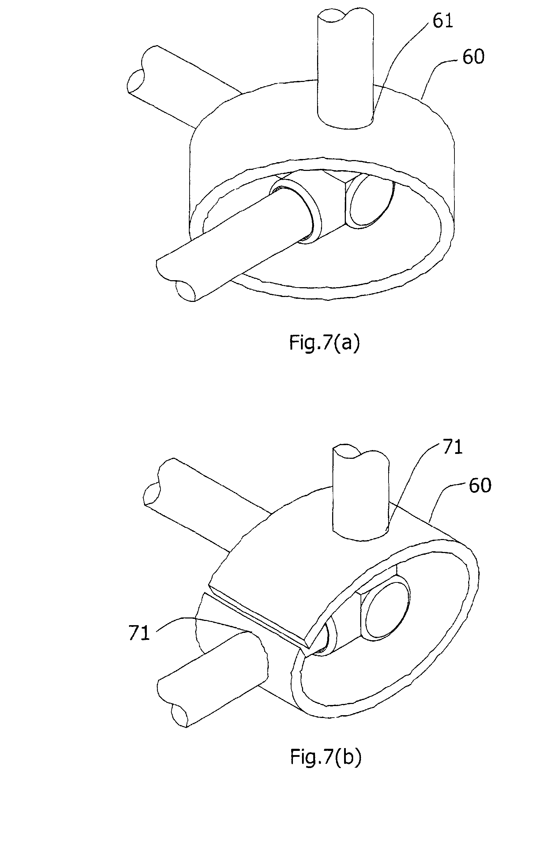

Referring to Fig. 7(a), the corner joints 11 may have additional protection provided by a strip 60 of rubber material wrapped around the joint and having one bar extending through it at an aperture 61. An alternative arrangement is shown in Fig. 7(b), in which the strip 60 is held in place by having two bars extending through it at apertures 71. Plastics ties may be used to assist with holding the strips in place. The sleeves 60 provide additional protection at the corner joints, absorbing much of the impact forces and thus helping to prevent slippage of a bar out of a joint socket.

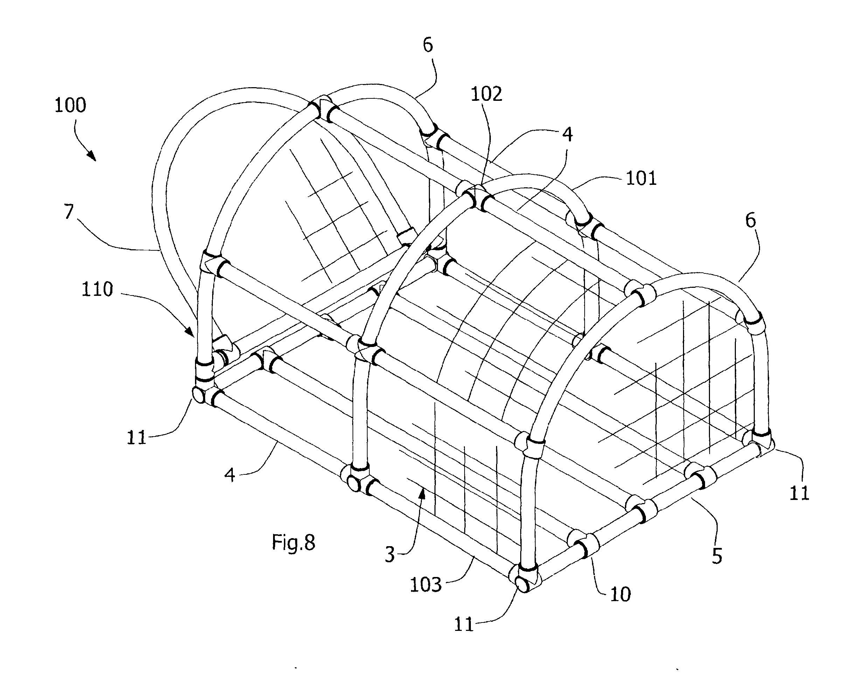

Referring to Fig. 8 an alternative lobster pot, 100, of the invention is illustrated. The pot 100 has a frame 110 with an additional central arched bar 101 for increased strength. This arrangement requires cross-shaped joints 102. The joints 102 have sockets similar to those of the joints 10 and 11 and the bars are connected in a similar manner. In this embodiment, the longitudinal bars which engage the arched bar 101 are shorter than the equivalent bars of the pots, and are indicated by the numeral 103.

It will be appreciated that the invention provides a marine trap which:-
has a very high strength by virtue of the frame 2 and the stiff cage 3,
is not prone to corrosion by virtue of the bar and mesh construction, and
does not require chafing ropes because the cage is stiff.

The invention is not limited to the embodiments described but may be varied in construction and detail. For example, the bar sleeve/coating may be of any other suitable corrosion-resistant material such as ABS, polypropylene, or nylon. The steel may be high tensile steel. Also, the same constructional features could be applied to other fish cages, such as fish farming cages. In the latter embodiment the frame may be the "rigid" part of the fish cage, possibly supporting downwardly-depending netting.

## Claims

1. A fish cage (1) comprising a frame (2) and a mes (3), wherein the frame (2) comprises frame members (4,5,6,7) having a metal core (45) and a plastics coating (46) and joints (10,11) having sockets (40,50) into which the frame members (4,5,6,7) are inserted.

2. A fish cage (1) as claimed in claim 1, wherein the frame members (4,5,6,7) comprise a metal core (45) inserted in a plastics sleeve (46).

3. A fish cage (1) as claimed in claims 1 or 2, wherein the metal core (45) is of steel material.

4. A fish cage (1) as claimed in any preceding claim, wherein at least some of the joints (10,11) are of plastics material.

5. A fish cage (1) as claimed in any preceding claim, wherein at least one frame member (4,5,6,7) is heat sealed at an end to a socket (40,50) of a joint.

6. A fish cage (1) as claimed in claim 5, wherein a heat seal extends in a ring between the socket (40,50) and the frame member.

7. A fish cage (1) as claimed in any preceding claim, wherein the frame (2) comprises at least one corner joint (11) having three mutually orthogonal sockets (41).

8. A fish cage (1) as claimed in any preceding claim, wherein the frame (2) comprises at least one T-joint (10) having a pair of opposed in-line sockets (51) and an orthogonal socket (51).

9. A fish cage (1) as claimed in any of claims 2 to 8, wherein the sleeve (46) are of polyethylene material.

10. A fish cage (1) as claimed in any preceding claim, wherein the mesh (3) is of stiff plastics-coated steel material.

11. A fish cage (1) as claimed in claim 10, wherein the mesh (3) is mounted within the frame (2).

12. A fish cage (1) as claimed in claim 11, wherein the mesh (3) is secured to the frame (2) by ties (30) tying the mesh (3) to frame members (4,5,6,7)

13. A fish cage (1) as claimed in any preceding claim, wherein the fish cage is a marine trap comprising a bait holder (22) and an inlet (20).

14. A fish cage (1) as claimed in any preceding claim, further comprising a protective web (60) of material extending around at least one joint.

15. A fish cage (1) as claimed in claim 14, wherein at least one bar extends through the protective web (60).

16. A method of producing a fish cage (1), according to any of the claims 1-15 comprising the steps of:
inserting metal cores (45) into plastics sleeves (46) to provide bars; and
interconnecting the bars by inserting the bars into sockets of joints.

17. A method as claimed in claim 16, wherein the joints are of plastics material.

18. A method as claimed in claims 16 or 17, comprising the further steps of applying heat in a ring around a joint socket to heat fuse the socket to the bar.

19. A method as claimed in claim 18, wherein the heating temperature is in a range of 120°C to 140°C.

## Patentansprüche

1. Ein Fischkäfig (1) aufweisend einen Rahmen (2) und ein Netz (3), worin der Rahmen (2) Rahmenteile (4, 5, 6, 7) aufweist, die einen Metallkern (45) und eine Kunststoffbeschichtung (46) und Verbindungen (10, 11) mit Buchsen (40, 50), in die die Rahmenteile (4, 5, 6, 7) eingesetzt sind, haben.

2. Ein Fischkäfig (1) wie Anspruch 1 beansprucht, worin die Rahmenteile (4, 5, 6, 7) einen Metallkern (45), der in eine Kunststoffhülle (46) eingesetzt ist, aufweisen.

3. Ein Fischkäfig (1) wie in Anspruch 1 oder 2 beansprucht, worin der Metallkern (45) aus Stahlmaterial ist.

4. Ein Fischkäfig (1) wie in irgendeinem vorhergehenden Anspruch beansprucht, worin mindestens einige der Verbindungen (10, 11) aus Kunststoffmaterial sind.

5. Ein Fischkäfig (1) wie in irgendeinem vorhergehenden Anspruch beansprucht, worin mindestens ein Rahmenteil (4, 5, 6, 7) an einem Ende an einer Buchse (40, 50) einer Verbindung heißgesiegelt ist.

6. Ein Fischkäfig (1) wie in Anspruch 5 beansprucht, worin eine Heißsiegelung sich in einem Ring zwischen der Buchse (40, 50) und dem Rahmenteil erstreckt.

7. Ein Fischkäfig (1) wie in irgendeinem vorhergehenden Anspruch beansprucht, worin der Rahmen (2) mindestens einen Eckverbinder (11) mit drei zueinander senkrechten Buchsen (41) hat.

8. Ein Fischkäfig (1) wie in irgendeinem vorhergehenden Anspruch beansprucht, worin der Rahmen (2) mindestens eine T-Verbindung (10) mit einem Paar von linear entgegengesetzten Buchsen (51) und einer senkrechten Buchse (51) aufweist.

9. Ein Fischkäfig (1) wie in irgendeinem der Ansprüche 2 bis 8 beansprucht, worin die Hüllen (46) aus Polyäthylen sind.

10. Ein Fischkäfig (1) wie in irgendeinem vorhergehenden Anspruch beansprucht, worin das Netz (3) aus steifem, kunststoffbeschichtetem Stahl-Material ist.

11. Ein Fischkäfig (1) wie in Anspruch 10 beansprucht, worin das Netz (3) innerhalb des Rahmens (2) angebracht ist.

12. Ein Fischkäfig (1) wie in Anspruch 11 beansprucht, worin das Netz (3) am Rahmen (2) durch Binder (30), die das Netz (3) an die Rahmenteile (4, 5, 6, 7) binden, befestigt ist.

13. Ein Fischkäfig (1) wie in irgendeinem vorhergehenden Anspruch beansprucht, worin der Fischkäfig eine Reuse ist, die einen Köderhalter (22) und einen Einlaß (20) aufweist.

14. Ein Fischkäfig (1) wie in irgendeinem vorhergehenden Anspruch beansprucht, weiter aufweisend ein Schutzgewebe (60) aus Material, das sich um mindestens eine Verbindung erstreckt.

15. Ein Fischkäfig (1) wie in Anspruch 14 beansprucht, worin mindestens eine Stange sich durch das Schutzgewebe (60) erstreckt.

16. Ein Verfahren zum Erzeugen eines Fischkäfigs (1 ), nach irgendeinem der Ansprüche 1 -15 , das die Schritte aufweist:
Einsetzen von Metallkemen (45) in Kunststoffhüllen (46) um Stangen zu schaffen; und
Verbinden der Stangen untereinander durch Einsetzen der Stangen in Buchsen von Verbindungen.

17. Ein Verfahren wie in Anspruch 16 beansprucht, worin die Verbindungen aus Kunststoffmaterial sind.

18. Ein Verfahren wie Anspruch 16 oder 17 beansprucht, das die weiteren Schritte des Anwendens von Hitze in einem Ring um eine Verbinderbuchse, um die Buchse mit der Stange hitzezuverschmelzen, aufweist.

19. Ein Verfahren wie in Anspruch 18 beansprucht, worin die Heiztemperatur in einem Bereich von 120° C - 140° C ist.

## Revendications

1. Cage à poisson (1) comprenant un cadre (2) et un treillis (3), dans laquelle le cadre (2) comprend des éléments de cadre (4, 5, 6, 7) ayant un noyau métallique (45) et un revêtement en plastique (46) et des éléments de jonction (10, 11) ayant des douilles (40, 50) dans lesquelles les éléments de cadre (4, 5, 6, 7) sont insérés.

2. Cage à poisson (1) comme revendiqué dans la revendication 1, dans laquelle les éléments de cadre (4, 5, 6, 7) consistent en un noyau métallique (45) inséré dans une gaine en plastique (46).

3. Cage à poisson (1) comme revendiqué dans la revendication 1 ou 2, dans laquelle le noyau métallique est en acier.

4. Cage à poisson (1) comme revendiqué dans une quelconque des revendications précédentes, dans laquelle au moins certains des éléments de jonction (10, 11) sont en matière plastique.

5. Cage à poisson (1) comme revendiqué dans une quelconque des revendications précédentes, dans laquelle au moins un élément de cadre (4, 5, 6, 7) est thermosoudé à une extrémité à une douille (40, 50) d'un élément de jonction.

6. Cage à poisson (1) comme revendiqué dans la revendication 5, dans laquelle une thermosoudure s'étend en cercle entre la douille (40, 50) et l'élément de cadre.

7. Cage à poisson (1) comme revendiqué dans une quelconque des revendications précédentes, dans laquelle le cadre (2) comprend au moins un élément de jonction de coin (11) ayant trois douilles mutuellement orthogonales (41).

8. Cage à poisson (1) comme revendiqué dans une quelconque des revendications précédentes, dans laquelle le cadre (2) comprend au moins un élément de jonction en T ayant une paire de douilles en ligne opposées (51) et une douille orthogonale (51).

9. Cage à poisson (1) comme revendiqué dans une quelconque des revendications 2 à 8, dans laquelle les gaines (46) sont en polyéthylène.

10. Cage à poisson (1) comme revendiqué dans une quelconque des revendications précédentes, dans laquelle le treillis (3) est en acier rigide revêtu de plastique.

11. Cage à poisson (1) comme revendiqué dans la revendication 10, dans laquelle le treillis (3) est monté à l'intérieur du cadre (2).

12. Cage à poisson (1) comme revendiqué dans la revendication 11, dans laquelle le treillis (3) est fixé au cadre (2) par des liens (30) attachant le treillis (3) à des éléments de cadre (4, 5, 6, 7).

13. Cage à poisson (1) comme revendiqué dans une quelconque des revendications précédentes, dans laquelle la cage à poisson est une nasse de mer comprenant un support d'appât (22) et un orifice d'entrée (20).

14. Cage à poisson (1) comme revendiqué dans une quelconque des revendications précédentes, comprenant en outre une nappe protectrice (60) de matière s'étendant autour d'au moins un élément de jonction.

15. Cage à poisson (1) comme revendiqué dans la revendication 14, dans laquelle au moins une barre s'étend à travers la nappe protectrice (60).

16. Procédé de fabrication d'une cage à poisson selon une quelconque des revendications 1 à 15, comprenant les étapes consistant:
- à insérer des noyaux métalliques (45) dans des gaines en plastique (46) pour fournir des barres, et
- à interconnecter les barres en insérant les barres dans des douilles d'élément de jonctions.

17. Procédé comme revendiqué dans la revendication 16, dans lequel les éléments de jonction sont en matière plastique.

18. Procédé comme revendiqué dans la revendication 16 ou 17, comprenant les étapes supplémentaires consistant à appliquer de la chaleur en cercle autour d'une douille d'élément de jonction pour thermosouder la douille à la barre.

19. Procédé comme revendiqué dans la revendication 18, dans lequel la température de chauffage est de l'ordre de 120 °C à 140 °C.
